# EUROPEAN PATENT APPLICATION

(11) **EP 2 648 442 A1**
(43) Date of publication of application: **09.10.2013**
(21) Application number: 10860260.8
(22) Date of filing: 30.11.2010
(51) Int. Cl.: H04W 24/02

(54) **METHOD FOR OBTAINING PARAMETERS, BASE STATION AND TERMINAL EQUIPMENT**

(71) Applicant: Fujitsu Limited, Kawasaki-shi, Kanagawa 211-8588 (JP)
(72) Inventor: LU, Yanling, Beijing 100025 (CN); ZHANG, Yuantao, Beijing 100025 (CN)
(74) Representative: Ward, James Norman
(86) International application number: PCT/CN2010/079270
(87) International publication number: WO 2012/071703

(57) **Abstract**

A method for obtaining parameters, base station and terminal equipment. The method comprises: receiving by a terminal equipment a request message sent by a base station reporting related parameters of a random access procedure occurred in at least one carrier, the request message including carrier identification information; and sending the related parameters of a random access procedure occurred in the at least one carrier by the terminal equipment to the base station according to the request message, such that corresponding random access optimization is performed by a network side by using the related parameters. With the method, the network side is enabled to optimize random access channels in a corresponding carrier, thereby reducing time delay and improving rate of success of random access, and solving the problems existing in a multi-band carrier system in the prior art.

## Description

### Technical Field

The present invention relates to the field of communications, and in particular to a method for obtaining parameters for optimizing random access procedure, base station and terminal equipment.

### Background Art

In a wireless communication system, a terminal equipment performs an uplink random access procedure to realize uplink synchronization. Only synchronization is realized in the uplink, can the terminal equipment perform uplink and downlink data transmission and message transmission with a base station.

Random access channel (RACH) optimization needs to be performed, so as to improve rate of success of the random access procedure and reduce time delay. In an enhanced long-term evolution advanced (LTE-A) system (a non-carrier aggregation system) in Rel. 9, for performing the optimization, the base station requires the terminal equipment to report some parameters related to the random access procedure, wherein these parameters may only be obtained by a terminal equipment, and the base station cannot obtain them directly.

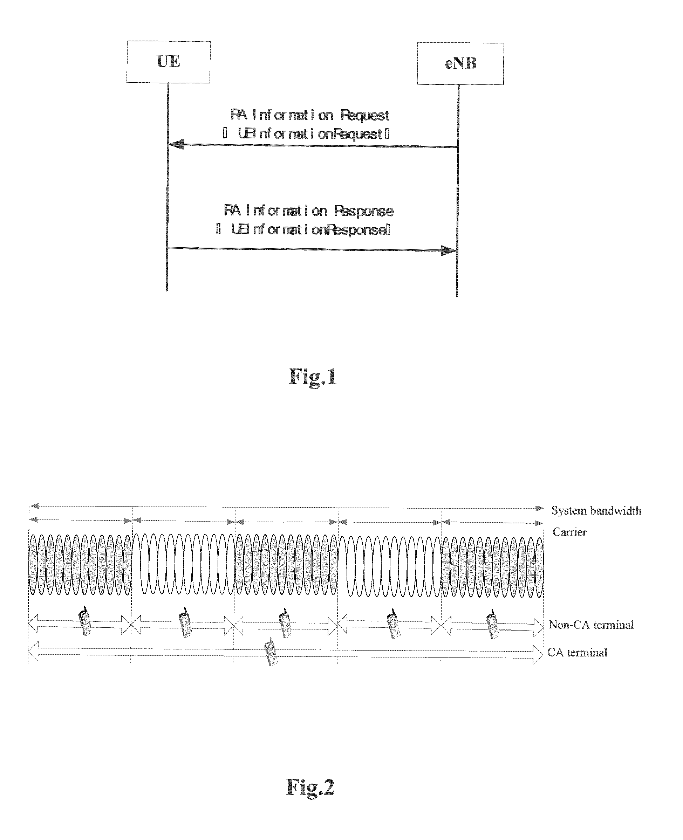

Figure 1 is a flowchart for obtaining parameters by a base station reported by a terminal equipment in the prior art. As shown in Fig. 1, a eNB sends first to the user equipment (UE) a request for reporting related parameters of a random access procedure , wherein the request may be sent via a UE Information Request; and after receiving the request, the UE provides the related parameters of a random access procedure to the eNB via a UE Information Response message; wherein two parameters are mainly included:
1) the number of random access preambles transmitted: refers to the number of random access preambles transmitted by a media access control (MAC) layer during the random access procedure that is last successfully completed; and
2) whether contention is detected: if contention is detected in at least one transmitted random access preamble during the random access procedure that is last successfully completed, "true" is set; otherwise, "false" is set.

After the eNB receives a report on the above two parameters sent by a terminal equipment in a cell, some entities of the eNB or a network side may reconfigure some parameters of an access channel and perform related optimization by using an optimization algorithm, so as to improve rate of success of access of the terminal equipment or reduce time delay.

It can be seen from above that the LTE-A system in Rel. 9 is a non-carrier aggregation system, that is, there is only on carrier for certain terminal equipment in a serving cell, and it is obviously that the random access procedure occurs only in the unique carrier.

Figure 2 is a schematic diagram of carrier aggregation. In a carrier aggregation (CA) system, as shown in Fig. 2, a terminal equipment may operate within a bandwidth of at most 100 MHz, that is, five carriers may be aggregated. For a multicarrier system, it may be divided into an intra-band CA system and an inter-band CA system.

Wherein, in the intra-band CA system, the random access procedure is performed in primary carriers, and not in secondary carriers. Hence, for a certain terminal equipment, the random access procedure occurs only in one carrier.

And in the inter-band CA system, the random access procedure occurs not only in primary carriers, but also in secondary carriers of other wave bands. Hence, for a certain terminal, the position of occurrence of the random access procedure (in which carrier) is not unique.

Therefore, in the implementation of the present invention, the inventors found that following defect exists in the prior art: in an inter-band CA system, as random access channels are relatively independent in each wave band, if the process shown in Fig. 1 is still used by the network side in performing optimization of the random access channels, the eNB cannot learn in which wave band the random access procedure to which the parameters reported by the terminal equipment correspond occurs, hence, the network side cannot perform corresponding optimization; in addition, no solution for solving the above problem is provided in the prior art.

Following documents are listed for the easy understanding of the present invention and conventional technologies, which are incorporated herein by reference as they are fully stated in this text.
1. 3GPP TS 36.321 V9.3.0 (2010-06) Medium Access Control (MAC) Protocol specification (Release 9); and
2. 3GPP TS 36.331 V9.4.0 (2010-09) Radio Resource Control (RRC) Protocol specification (Release 9).

### Summary of the Invention

An object of the embodiments of the present invention is to provide a method for obtaining parameters, a base station and a terminal equipment, so that in a multi-band carrier system, the base station may instruct a terminal equipment to report related parameters of a random access procedure occurred in a corresponding carrier, or a terminal equipment actively reports related parameters including carrier identification information according to a request of the base station, such that a network side can use the related parameters to perform optimization to random access channels in the corresponding carrier, thereby reducing time delay and improving rate of success of random access, and solving the problems existing in a multi-band carrier system in the prior art.

According to an aspect of the embodiments of the present invention, there is provided a method for obtaining parameters, comprising:
Receiving by a terminal equipment a request message sent by a base station reporting related parameters of a random access procedure occurred in at least one carrier, the request message including carrier identification information; and
sending the related parameters of a random access procedure occurred in the at least one carrier by the terminal equipment to the base station according to the request message, such that corresponding random access optimization is performed by a network side by using the related parameters;
wherein the related parameters comprise the number of the random access preambles transmitted in the random access procedure that is last successfully completed in the at least one carrier, and information on whether contention is detected for at least one of random access preambles during the random access procedure that is last successfully completed.

According to another aspect of the embodiments of the present invention, there is provided a method for obtaining parameters, comprising:
transmitting by a base station to a terminal equipment a request message for obtaining related parameters of a random access procedure occurred in at least one carrier, the request message including carrier identification information; and
receiving the related parameters of a random access procedure occurred in at least one carrier fed back by the terminal equipment according to the request message, such that the base station performs corresponding random access optimization by using the related parameters; wherein the related parameters comprise the number of the random access preambles transmitted in the random access procedure that is last successfully completed in the at least one carrier, and information on whether contention is detected for at least one of random access preambles during the random access procedure that is last successfully completed.

According to still another aspect of the embodiments of the present invention, there is provided a terminal equipment, comprising:
a first receiving unit to receive a request message sent by a base station reporting related parameters of a random access procedure occurred in at least one carrier, the request message including carrier identification information; and
a first sending unit to send the related parameters of a random access procedure occurred in the at least one carrier to the base station according to the request message received by the first receiving unit, such that corresponding random access optimization is performed by a network side by using the related parameters;
wherein the related parameters comprise the number of the random access preambles transmitted in the random access procedure that is last successfully completed in the at least one carrier, and information on whether contention is detected for at least one of random access preambles during the random access procedure that is last successfully completed.

According to a further aspect of the embodiments of the present invention, there is provided a base station, comprising:
a second sending unit to send a request message for obtaining related parameters of a random access procedure occurred in at least one carrier to a terminal equipment, the request message including carrier identification information; and
a second receiving unit to receive the related parameters of a random access procedure occurred in the at least one carrier fed back by the terminal equipment according to the request message, such that the base station performs corresponding random access optimization by using the related parameters;
wherein the related parameters comprise the number of the random access preambles transmitted in the random access procedure that is last successfully completed in the at least one carrier, and information on whether contention is detected for at least one of random access preambles during the random access procedure that is last successfully completed.

According to a further still aspect of the embodiments of the present invention, there is provided a method for obtaining parameters, comprising the steps of:
receiving by a terminal equipment a request message sent by a base station reporting related parameters of a random access procedure ; and
sending the related parameters of a random access procedure occurred in a carrier by the terminal equipment to the base station according to the request message, such that corresponding random access optimization is performed by a network side by using the related parameters;
wherein the related parameters comprise carrier identification information, the number of the random access preambles transmitted during the random access procedure that is last successfully completed in a carrier corresponding to the carrier identification information, and information on whether contention is detected for at least one of random access preambles during the random access procedure that is last successfully completed.

According to a further still aspect of the embodiments of the present invention, there is provided a method for obtaining parameters, comprising the steps of:
transmitting by a base station to a terminal equipment a request message for obtaining occurred related parameters of a random access procedure ; and
receiving the related parameters of a random access procedure occurred in a carrier fed back by the terminal equipment according to the request message, such that the base station performs corresponding random access optimization by using the related parameters;
wherein the related parameters comprise carrier identification information, the number of the random access preambles transmitted during the random access procedure that is last successfully completed in the carrier corresponding to the carrier identification information, and information on whether contention is detected for at least one of random access preambles during the random access procedure that is last successfully completed.

According to a further still aspect of the embodiments of the present invention, there is provided a terminal equipment, comprising:
a third receiving unit to receive a request message sent by a base station reporting related parameters of a random access procedure ; and
a fourth sending unit to send the related parameters of a random access procedure occurred in a carrier to the base station according to the request message received by the third receiving unit, such that corresponding random access optimization is performed by a network side by using the related parameters;
wherein the related parameters comprise carrier identification information, the number of the random access preambles transmitted during the random access procedure that is last successfully completed in the carrier corresponding to the carrier identification information, and information on whether contention is detected for at least one of random access preambles during the random access procedure that is last successfully completed.

According to a further still aspect of the embodiments of the present invention, there is provided a base station, comprising:
a fifth sending unit to send a request message for obtaining occurred related parameters of a random access procedure to a terminal equipment; and
a fourth receiving unit to receive the related parameters of a random access procedure occurred in a carrier fed back by the terminal equipment according to the request message, such that the base station performs corresponding random access optimization by using the related parameters;
wherein the related parameters comprise carrier identification information, the number of the random access preambles transmitted during the random access procedure that is last successfully completed in the carrier corresponding to the carrier identification information, and information on whether contention is detected for at least one of random access preambles during the random access procedure that is last successfully completed.

According to a further still aspect of the embodiments of the present invention, there is provided a computer-readable program, wherein when the program is executed in a terminal equipment, the program enables the computer to carry out the method for obtaining parameters as described above in the terminal equipment.

According to a further still aspect of the embodiments of the present invention, there is provided a storage medium in which a computer-readable program is stored, wherein the computer-readable program enables the computer to carry out the method for obtaining parameters as described above in a terminal equipment.

According to a further still aspect of the embodiments of the present invention, there is provided a computer-readable program, wherein when the program is executed in a base station, the program enables the computer to carry out the method for obtaining parameters as described above in the base station.

According to a further still aspect of the embodiments of the present invention, there is provided a storage medium in which a computer-readable program is stored, wherein the computer-readable program enables the computer to carry out the method for obtaining parameters described above in a base station.

The advantages of the embodiments of the present invention exist in: in a multi-band carrier system, the base station may instruct a terminal equipment to report related parameters of a random access procedure occurred in a corresponding carrier, or a terminal equipment actively reports related parameters including carrier identification information according to a request of the base station, such that a network side can perform optimization to random access channels in the corresponding carrier, thereby reducing time delay and improving rate of success of random access, and solving the problems existing in a multi-band carrier system in the prior art.

Particular embodiments of the invention have been disclosed in detail with reference to the following description and drawings and are indicative of some of the ways in which the principles of the invention may be employed, but it is understood that the invention is not limited correspondingly in scope. Rather, the invention includes all changes, modifications and equivalents coming within the spirit and terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Figure 1 is a flowchart for obtaining related parameters by a base station reported by a terminal equipment in the prior art;
Figure 2 is a schematic diagram of carrier aggregation in a carrier aggregation system;
Figure 3 is a flowchart of the method for obtaining parameters of a first embodiment of the present invention;
Figure 4 is a flowchart of the method for obtaining parameters of a second embodiment of the present invention;
Figure 5 is a flowchart of the method for obtaining parameters of a third embodiment of the present invention;
Figure 6 is a schematic structural diagram of a terminal equipment of a fourth embodiment of the present invention;
Figure 7 is a schematic structural diagram of a base station of a fifth embodiment of the present invention;
Figure 8 is a flowchart of the method for obtaining parameters of a sixth embodiment of the present invention;
Figure 9 is a flowchart of the method for obtaining parameters of a seventh embodiment of the present invention;
Figure 10 is a flowchart of the method for obtaining parameters of an eighth embodiment of the present invention;
Figure 11 is a schematic structural diagram of a terminal equipment of a ninth embodiment of the present invention; and
Figure 12 is a schematic structural diagram of a base station of a tenth embodiment of the present invention.

### Detailed Description of the Invention

The embodiments of the present invention are described as follows with reference to the drawings. These embodiments are illustrative only, and are intended to limit the present invention. For easy understanding of the principle and embodiments of the present invention by those skilled in the art, the embodiments of the present invention shall be described taking a multi-band CA system in an LTE-A system as an example. However, it should be understood the present invention is not limited thereto, and is also applicable to any systems where positions of occurrence of random access procedure are not unique.

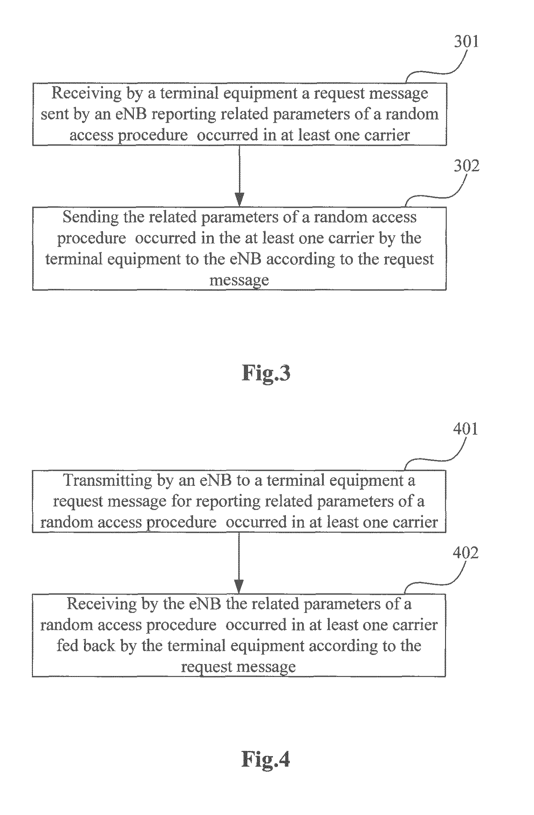

Fig. 3 is a flowchart of the method for obtaining parameters of a first embodiment of the present invention. As shown in Fig. 3, the method comprises:
step 301: receiving, by a terminal equipment, a request message sent by an basestation ( eNB ) reporting related parameters of a random access procedure occurred in at least one carrier, the request message including carrier identification information; and
step 302: sending the related parameters of a random access procedure of the random access procedure occurred in the at least one carrier by the terminal equipment to the eNB according to the request message, such that corresponding random access optimization is performed by a network side by using the related parameters;
wherein the related parameters comprise: the number of the random access preambles transmitted in the random access procedure that is last successfully completed in the at least one carrier, and information on whether contention is detected for at least one of random access preambles during the random access procedure that is last successfully completed.

In this embodiment, in step 301, the request message may use UE Information Request; and in step 302, after receiving the request message, the terminal equipment feeds back the related parameters via a UE Information Response message.

In this embodiment, in step 301, the information indicating of the carrier used for the related parameters of the random access procedure needing to be reported by the terminal equipment may be carried in the request message by the eNB, that is, carrier identification information needs to be carried; thus, in step 302, after receiving the request message, the terminal equipment may report the related parameters according to the carrier identification information carried in the request message, and needs not to report the carrier identification information in feeding back the related parameters.

Wherein, if the eNB instructs in the request message in step 301 that related parameters of the random access procedure performed in one carrier, such as carrier Cj, need to be reported, the terminal equipment directly sends the related parameters of the random access procedure performed in carrier Cj to the eNB in step 302; and if the eNB instructs in step 301 that related parameters of the random access procedure performed in multiple carriers need to be reported, the terminal equipment reports the related parameters of the random access procedure performed in multiple carriers according to a predetermined rule in step 302, without needing to report the carrier identification information. For example, the reported related parameters of the random access procedure are ordered according to an arrangement order of the carrier identification information in the request message, and are sent to the eNB in order. Thus, the eNB may receive in order the related parameters corresponding to the sent carrier identification information.

In this embodiment, the "information on whether contention is detected for at least one of random access preambles during the random access procedure that is last successfully completed" contained in the related parameters may be denoted by "0" or "1"; for example, "0" denotes that there exists contention, and "1" denotes that there exists no contention, and vice versa; furthermore, it may also be denoted by "true" or "false" as described in Background Art, which shall not be described any further. However, it is not limited thereto, and any other symbols may be used for denotation.

In this embodiment, the carrier identification information may be determined according the system configuration or according to the number of the carriers for performing random access procedure in each wave band. Wherein,
1) when the system allocates carrier identification information in order, such as a carrier identifier which may used to uniquely identify a carrier; at this moment, the carrier identification information may be the carrier identifier; for example, in Rel. 10, for each terminal equipment, the primary carriers and the secondary carriers have a unique number, which is ServCellIndex; and at this moment, ServCellIndex may be taken as the carrier identifier in the at least one carrier;
   thus, the terminal equipment may send the related parameters of the random access procedure occurred in the corresponding carrier to the eNB according to the carrier identifier;
2) when there exists only one carrier capable of being used for random access procedure in each wave band, the carrier identification information may be denoted by wave band identification information, such a wave band identifier; for example, the terminal equipment has three wavebands, and their wave band identifiers are band0, band1 and band2, respectively; and at the same time, there are two carriers in band0, that is, carner0 and carrier1, there are three carriers in band1, that is, carrier0, carrier1 and carrier2, and there are two carriers in band2, that is,carrier0 and carrier1; in these three wavebands, if the random access procedure is performed in one carrier, such as carrier0, a wave band identifier, such as band0, band1 or band2, may be taken as the carrier identifier;
   thus, the terminal equipment may send the related parameters of the random access procedure occurred in the corresponding carrier to the eNB according to the wave band identifier in the request message;
3) when there exist more than one carriers capable of being used for random access procedure in each wave band and the carrier identification information is unique within the same wave band but is not unique between different wavebands, the carrier identification information needs to include both wave band identification information and carrier identification information at the same time; for example, the terminal equipment has three wavebands, and their wave band identification information, such as wave band identifiers, is band0, band1 and band2, respectively; and at the same time, there are two carriers in band0, that is, carrier0 and carrier1, there are three carriers in band1, that is, carrier0, carrier1 and carrier2, and there are two carriers in band2, that is, carner0 and carrier1; in band1 and band2, random access is performed in carrier0 and carrier1; hence, both the wave band identification information, such as wave band identifiers, and the carrier identification information within the wave band, such as carrier identifiers, need to be used at the same time as the carrier identification information in the request message;
   thus, the terminal equipment may send the related parameters of the random access procedure occurred in the corresponding carrier to the eNB according to the wave band identifiers and the carrier identifiers in the request message.

In this embodiment, after the related parameters are obtained by the eNB, the related parameters may be used, together with the preserved carrier identification information, to generate input parameters for a random access optimization algorithm, so that the eNB uses the input parameters to perform optimization. The optimization algorithm may be any one of existing optimization algorithms, which shall not be describe any further. Furthermore, the eNB may send the related parameters to other functional entities of the network side, such as a network management system, via a network, so that the functional entities use the related parameters for performing optimization.

It can be seen from the above embodiment that in a multi-band carrier system, the eNB may instruct the terminal equipment to report related parameters of a random access procedure occurred in a corresponding carrier, such that the network side can perform optimization to random access channels in the corresponding carrier by using the related parameters, thereby reducing time delay and improving rate of success of random access, and solving the problems existing in a multi-band carrier system in the prior art.

Figure 4 is a flowchart of the method for obtaining parameters of a second embodiment of the present invention. As shown in Fig. 4, the method comprises: step
step 401: transmitting by an eNB to a terminal equipment a request message for reporting related parameters of a random access procedure occurred in at least one carrier, the request message including carrier identification information; and
step 402: receiving the related parameters of a random access procedure occurred in at least one carrier fed back by the terminal equipment according to the request message, such that the eNB performs corresponding random access optimization by using the related parameters; wherein the related parameters comprise the number of the random access preambles transmitted in the random access procedure that is last successfully completed in the at least one carrier, and information on whether contention is detected for at least one of random access preambles during the random access procedure that is last successfully completed.

In this embodiment, the eNB may instruct the terminal equipment to report related parameters of a random access procedure occurred in a corresponding carrier; hence, when the terminal equipment reports the related parameters, it may report no carrier identification information. Wherein, the number of pieces of the carrier identification information may be 1 or more.

In this embodiment, the carrier identification information transmitted by the eNB is similar to that of the first embodiment, which shall not be described any further. Furthermore, in this embodiment, the method comprises: sending the related parameters by the eNB to other functional entities at the network side, such that the other functional entities at the network side perform corresponding random access optimization according to the related parameters. For example, the eNB may send the related parameters to a network management system via a core network, so that the network management system performs corresponding random access optimization according to the related parameters.

It can be seen from the above embodiment that in a multi-band carrier system, the eNB may instruct the terminal equipment to report related parameters of a random access procedure occurred in a corresponding carrier, such that the network side can perform optimization to random access channels in the corresponding carrier, thereby reducing time delay and improving rate of success of random access, and solving the problems existing in a multi-band carrier system in the prior art.

The method shall be described in detail below taking that in a multi-band CA system, the eNB instructs the terminal equipment to report related parameters of a random access procedure occurred in at least one carrier, as an example.

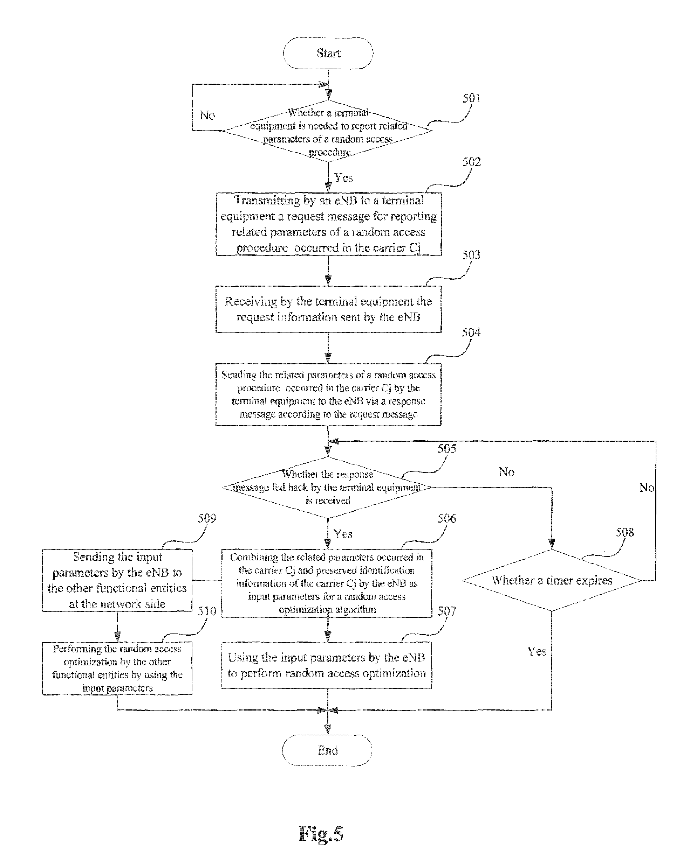

Figure 5 is a flowchart of the method for obtaining parameters of a third embodiment of the present invention. As shown in Fig. 5, the method comprises:
step 501: judging, by an eNB, according to the requirement in a random access optimization algorithm, whether a terminal equipment is needed to report related parameters of a random access procedure ; and if the result of judgment is positive, executing step 502; otherwise, proceeding with judgment;
step 502: initiating a request if the result of judgment in step 501 is that the terminal equipment is needed to report related parameters of a random access procedure;
wherein, the eNB may send the request via a random access information request message, such as a UE Information Request message, and indicates, in the random access information request message, related parameters of a random access procedure in the carrier Cj needing to be reported by the terminal equipment;
wherein, the message comprises carrier identification information, the carrier identification information being as described in the first and second embodiments, and shall not be described any further;
the related parameters comprise: the number of the random access preambles transmitted in the random access procedure that is last successfully completed in the carrier Cj, and information on whether contention is detected for at least one of random access preambles during the random access procedure that is last successfully completed;
step 503: receiving the request information by the terminal equipment;
step 504: sending the related parameters of a random access procedure occurred in the carrier Cj by the terminal equipment to the eNB via a response message according to the carrier identification information in the request message;
wherein the response message may be a random access information response message, such as a UE Information Response message; at this moment, as the eNB definitely instruct to report the related parameters of a random access procedure occurred in the carrier Cj, the carrier identification information may not be included in the response message;
step 505: judging by the eNB whether the response message fed back by the terminal equipment according to the request message is received; and if the result of judgment is positive, executing step 506; otherwise, executing step 508;
step 506: combining the related parameters occurred in the carrier Cj and preserved identification information of the carrier Cj by the eNB as input parameters for a random access optimization algorithm, if the eNB receives the response message fed back by the terminal equipment in step 505;
step 507: using the input parameters by the eNB to perform random access optimization in a predetermined random access optimization algorithm;
wherein the eNB is taken as an entity at the network side for executing the optimization algorithm, and the optimization algorithm may be any one of existing optimization algorithms, which shall not be describe any further;
step 508: judging by the eNB whether a timer expires, if the result of judgment in step 505 is that the response message is not received, and turning back to step 505 if the timer does not expire; otherwise, determining by the eNB that the response message is not received, the process being terminated;
furthermore, in addition that the eNB is taken as an entity at the network side for executing the optimization algorithm, other functional entities may also be taken as entities for executing the optimization algorithm; for example, a network management system may be used to execute the optimization algorithm; hence, after step 506, step 509 may further be included;
step 509: sending the combined parameters of the related parameters in the carrier Cj and the preserved identification information of the carrier Cj by the eNB to the other functional entities via the network; and
step 510: performing the random access optimization by the other functional entities according to the combined parameters.

In the above embodiment, in step 502, the description is given taking that the eNB instructs the terminal equipment to report related parameters of a random access procedure in a carrier Cj as an example. Furthermore, the eNB may also instruct to report related parameters of a random access procedure in more than one carriers. Thus, the number of pieces of the carrier identification information contained in the random access information request message in step 502 may be 1 or more. In such a case, in step 504, the terminal equipment may report the related parameters of the random access procedure performed in multiple carriers according to a predetermined rule, without needing to report the carrier identification information. For example, the reported related parameters of the random access procedure are ordered in an arrangement order of the carrier identification information in the random access information request message, and are sent to the eNB in order. Thus, the eNB may receive in order the related parameters corresponding to the sent carrier identification information.

In this embodiment, the step of performing the random access optimization comprises: optimizing the parameters related to the random access procedure notified by the eNB to the terminal equipment; wherein parameters needing to be dynamically adjusted and optimized comprises: channel configuration parameters of a random access channel, transmission power control parameters of the random access channel, backward parameters of the random access channel, and segmentation parameters of a preamble set of the random access channel, etc.

For example, a parameter of "power step" is contained in the transmission power control parameters of the random access channel. If the eNB failed in the last transmission of preambles, it will increase the power by the power step before the next transmission of preambles,. If the value of the power step is too small, the transmission power value will not be big enough to overcome the path loss and interference yet, even if the terminal equipment reaches the maximum times of preamble transmission, hence the eNB is unable to receive the preambles successfully; and if the value of the power step is too large, the preamble transmission power of the terminal equipment will reach a high value in a short time, which bring unnecessary interference to other terminal equipments. Therefore, the power step needs to be optimized. During optimization, the eNB requests all the terminal equipments in the cell to report the number of preambles sent during a random access procedure completed successfully in one or more carriers and whether contention is detected in this random access procedure, hence, the eNB may use the related parameters sent by each terminal equipment to perform optimization. That is, counting the above two parameters of all the terminal equipments in a certain carrier. If the eNB finds that the number of the preambles sent by the terminal equipment in the random access procedure is generally relatively large, it means that the time delay is relatively long, but the number of the terminals in which contention is detected is relatively small, indicating that the time delay in the random access procedure is mainly due to insufficiency of power of the terminal equipment for sending preambles, but not due to occurrence of contention between the accessed resources (that is, when multiple terminals send the same preambles in the same access channels at the same time, collision will occur and contention will appear. This is often due to the access channels are not enough or the preambles available for the terminals are not enough). At this moment, it may be primarily judged that the the power step is possibly too small and needs to be adjusted.

In the above embodiment, the description is given to the parameter optimization taking power step as an example. Any one of the existing algorithms may be used in the optimization of the other parameters above, which shall not be described here any further.

It can be seen from the above embodiment that in a multi-band carrier system, the eNB may instruct the terminal equipment to report related parameters of a random access procedure occurred in a corresponding carrier, such that the network side can perform optimization to random access channels in the corresponding carrier, thereby reducing time delay and improving rate of success of random access, and solving the problems existing in a multi-band carrier system in the prior art.

It should be understood by those skilled in the art that all or part of the steps in the methods of the above embodiments may be implemented by related hardware instructed by a program, and the program may be stored in a computer-readable storage medium. In executing the program, all or part of the steps in the methods of the above embodiments may be included, and the storage medium may comprise an ROM, an RAM, a floppy disk, and a compact disk, etc.

An embodiment of the present invention provides also an eNB and a terminal equipment as described below. As the principles of the eNB and the terminal equipment for solving problems are similar to those of the method for obtaining parameters based on an eNB and a terminal equipment as described above, the implementation of the method may be referred to for the implementation of the eNB and the terminal equipment, and the repeated parts shall not be described further.

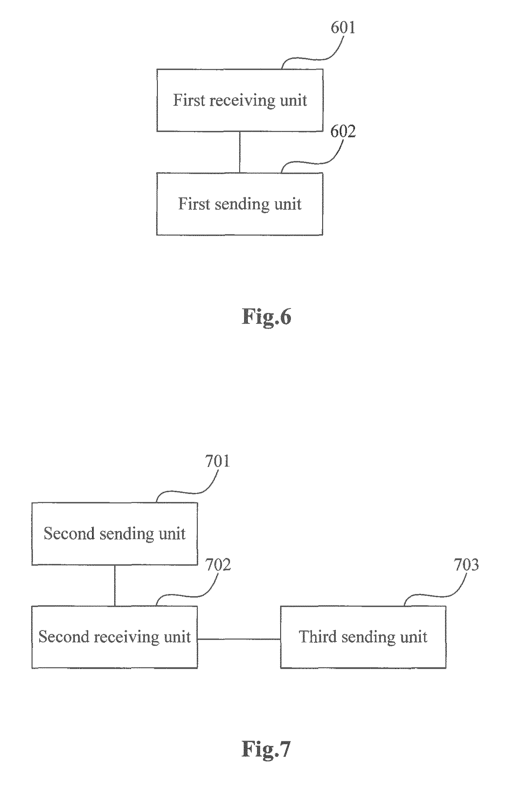

Figure 6 is a schematic structural diagram of a terminal equipment of a fourth embodiment of the present invention. As shown in Fig. 6, the terminal equipment comprises a first receiving unit 601 and a first sending unit 602; wherein
the first receiving unit 601 is configured to receive a request message sent by an eNB reporting related parameters of a random access procedure occurred in at least one carrier, the request message including carrier identification information; and
the first sending unit 602 is configured to send the related parameters of a random access procedure occurred in the at least one carrier to the eNB according to the request message received by the first receiving unit 601, such that corresponding random access optimization is performed by a network side by using the related parameters;
wherein the related parameters comprise the number of the random access preambles transmitted in the random access procedure that is last successfully completed in the at least one carrier, and information on whether contention is detected for at least one of random access preambles during the random access procedure that is last successfully completed.

In this embodiment, the carrier identification information may be carrier identification information for uniquely identifying carrier, and the first sending unit 602 is particularly used to send the related parameters of a random access procedure occurred in a corresponding carrier to the eNB according to the carrier identification information in the request message.

When one carrier in each wave band is capable of being used for a random access, the carrier identification information is preconfigured wave band identification information, and the first sending unit 602 is particularly used to send the related parameters of a random access procedure occurred in a corresponding carrier to the eNB according to the wave band identification information in the request message.

And when more than one carriers in each wave band are capable of being used for a random access, the request message comprises wave band identification information and carrier identification information; wherein the carrier identification information is unique in the same wave band and is not unique between different wave bands, and the first sending unit 602 is particularly used to send the related parameters of a random access procedure occurred in a corresponding carrier to the eNB according to the wave band identification information and the carrier identification information in the request message.

Furthermore, in this embodiment, the terminal equipment comprises a storing unit (not shown) configured to store related parameters of the random access procedure performed successfully by the terminal equipment in a carrier.

It can be seen from the above embodiment that in a multi-band carrier system, the terminal equipment may report related parameters of a random access procedure occurred in a corresponding carrier according to an instruction of the eNB and send the related parameters to the eNB, such that the network side can perform optimization to random access channels in the corresponding carrier, thereby reducing time delay and improving rate of success of random access, and solving the problems existing in a multi-band carrier system in the prior art.

Figure 7 is a schematic structural diagram of an eNB of a fifth embodiment of the present invention. As shown in Fig. 7, the eNB comprises: a second sending unit 701 and a second receiving unit 702; wherein
the second sending unit 701 is configured to send a request message for obtaining related parameters of a random access procedure occurred in at least one carrier to an eNB, the request message including carrier identification information; and
the second receiving unit 702 is configured to receive the related parameters of a random access procedure occurred in the at least one carrier fed back by the terminal equipment according to the request message, such that the eNB performs corresponding random access optimization by using the related parameters; wherein the related parameters comprise the number of the random access preambles transmitted during the random access procedure that is last successfully completed in the at least one carrier, and information on whether contention is detected for at least one of random access preambles during the random access procedure that is last successfully completed.

In this embodiment, the carrier identification information is as described in the above embodiments, which shall not be described here any further.

The eNB is taken as an entity at the network side for performing the random access optimization. Furthermore, other functional entities at the network side may also be taken as entities for performing the random access optimization. In such a case, the eNB may further comprise a third sending unit 703 configured to send the related parameters of a random access procedure occurred in the at least one carrier received by the second receiving unit 702 to the other functional entities at the network side, such that the other functional entities at the network side use the related parameters to perform corresponding random access optimization.

Furthermore, the eNB may comprise a storing unit (not shown) configured to store the carrier identification information..

It can be seen from the above embodiment that in a multi-band carrier system, the eNB may instruct the terminal equipment to report related parameters of a random access procedure occurred in a corresponding carrier, such that the network side can perform optimization to random access channels in the corresponding carrier, thereby reducing time delay and improving rate of success of random access, and solving the problems existing in a multi-band carrier system in the prior art.

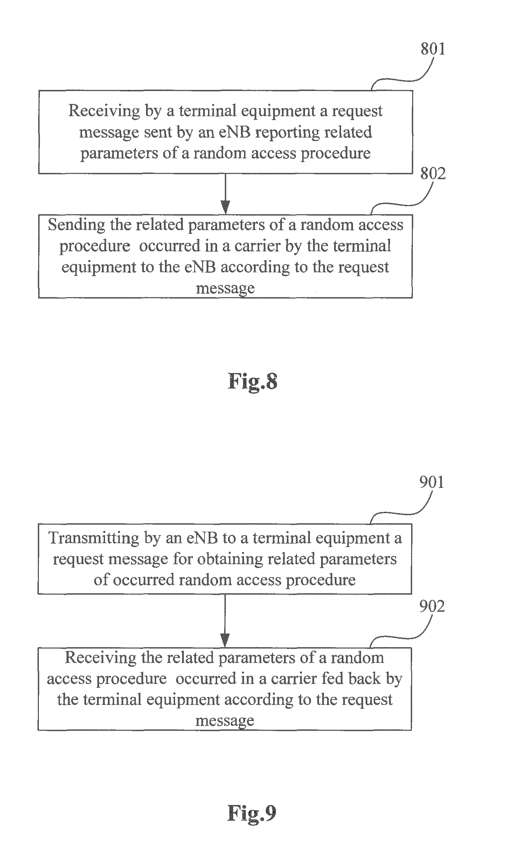

Figure 8 is a flowchart of the method for obtaining parameters of a sixth embodiment of the present invention. As shown in Fig. 8, the method comprises:
step 801: receiving by a terminal equipment a request message sent by an eNB reporting related parameters of a random access procedure ; and
step 802: sending the related parameters of a random access procedure occurred in a carrier by the terminal equipment to the eNB according to the request message, such that corresponding random access optimization is performed by a network side by using the related parameters;
wherein the related parameters comprise carrier identification information, the number of the random access preambles transmitted during the random access procedure that is last successfully completed in a carrier corresponding to the carrier identification information, and information on whether contention is detected for at least one of random access preambles during the random access procedure that is last successfully completed.

In this embodiment, in step 801, the request message may use a UE Information Request message; and in step 802, the terminal equipment feeds back corresponding parameters via a UE Information Response message after receiving the request message.

In this embodiment, in step 801,the eNB only indicates in the request message the related parameters of a random access procedure needing to be reported by the terminal equipment; and in step 802, the related parameters fed back by the terminal equipment after the terminal equipment receives the request message may comprise carrier identification information to which all or part of the carriers correspond, the number of the random access preambles transmitted in the random access procedure that is last successfully completed in each carrier to which carrier identification information corresponds, and information on whether contention is detected for at least one of random access preambles during the random access procedure that is last successfully completed.

In this embodiment, as the carrier identification information may comprise the carrier identification information to which all or part of the carriers correspond, step 802 may particularly comprise: sending the related parameters of a random access procedure occurred in all or part of the carriers by the terminal equipment to the eNB according to the request message; wherein
if it is determined that the related parameters in all the carriers reported this time are different from those in all the carriers reported last time, the related parameters in all the carriers reported by the terminal equipment this time may comprise: all the carrier identification information, the number of the random access preambles transmitted during the random access procedure that is last successfully completed in each carrier to which the carrier identification information corresponds, and information on whether contention is detected for at least one of random access preambles during the random access procedure that is last successfully completed; and

if it is determined that the related parameters in part of the carriers among the related parameters in all the carriers reported this time are identical to the related parameters in the part of the carriers reported last time, but the related parameters in the other part of the carriers of the related parameters in all the carriers reported this time are different from the related parameters in the other part of the carriers reported last time, the terminal equipment may not report the related parameters in the part of the carriers, and report only the related parameters in the other part of the carriers. Therefore, the terminal equipment report this time the carrier identification information of the other carriers, the number of the random access preambles transmitted in the random access procedure that is last successfully completed in each carrier to which the carrier identification information corresponds, and information on whether contention is detected for at least one of random access preambles during the random access procedure that is last successfully completed.

In this embodiment, the "information on whether contention is detected for at least one of random access preambles during the random access procedure that is last successfully completed" contained in the related parameters may be denoted by "0" or "1"; for example, "0" denotes that there exists contention, and "1" denotes that there exists no contention, and vice versa; furthermore, it may also be denoted by "true" or "false" as described in Background Art, which shall not be described any further. However, it is not limited thereto, and any other symbols may be used for denotation.

In this embodiment, the carrier identification information may be determined according the system configuration or according to the number of the carriers for performing random access procedure in each wave band. Wherein,
1) when the system allocates carrier identification information in order, such as a carrier identifier, for each carrier, the carrier identifier may uniquely identify the carrier; at this moment, the carrier identification information may be the carrier identifier;
2) when there exists only one carrier capable of being used for random access procedure in each wave band, the carrier identification information may be denoted by wave band identification information, such a wave band identifier; and
3) when there exist more than one carriers capable of being used for random access procedure in each wave band and the carrier identification information is unique within the same wave band but is not unique between different wavebands, the carrier identification information needs to include wave band identification information and carrier identification information at the same time.

In this embodiment, after the related parameters are obtained by the eNB, the related parameters may be taken as input parameters for a random access optimization algorithm, so that the eNB uses the input parameters to perform optimization. The optimization algorithm may be any one of existing optimization algorithms, which shall not be describe any further. Furthermore, the eNB may send the related parameters to other functional entities of the network side via a network, so that the functional entities perform optimization according to the related parameters.

It can be seen from the above embodiment that in a multi-band carrier system, the terminal equipment may report related parameters of a random access procedure according to an instruction of the eNB, such that the network side can perform optimization to random access channels in a corresponding carrier, thereby reducing time delay and improving rate of success of random access, and solving the problems existing in a multi-band carrier system in the prior art.

Figure 9 is a flowchart of the method for obtaining parameters of a seventh embodiment of the present invention. As shown in Fig. 9, the method comprises:
step 901: transmitting by an eNB to a terminal equipment a request message for obtaining related parameters of occurred random access procedure ; and
step 902: receiving the related parameters of a random access procedure occurred in a carrier fed back by the terminal equipment according to the request message, such that the eNB performs corresponding random access optimization by using the related parameters; wherein the related parameters comprise carrier identification information, the number of the random access preambles transmitted during the random access procedure that is last successfully completed corresponding to the carrier identification information, and information on whether contention is detected for at least one of random access preambles during the random access procedure that is last successfully completed.

Wherein the carrier identification information is as described in the above embodiments, and shall not be described here any further.

In this embodiment, the eNB may be taken as an entity for performing optimization to the random access; however, other functional entities at a network side may also perform optimization to the random access. Thus, the method further comprises:
sending the related parameters by the eNB to the other functional entities at the network side, such that the other functional entities at the network side perform corresponding random access optimization by using the related parameters.

It can be seen from the above embodiment that in a multi-band carrier system, the eNB may instruct the terminal equipment to report related parameters of a random access procedure including carrier identification information, such that the network side can perform optimization to random access channels in the corresponding carrier, thereby reducing time delay and improving rate of success of random access, and solving the problems existing in a multi-band carrier system in the prior art.

The method shall be described in detail below taking that in a multi-band CA system, the eNB instructs the terminal equipment to report related parameters of a random access procedure, as an example.

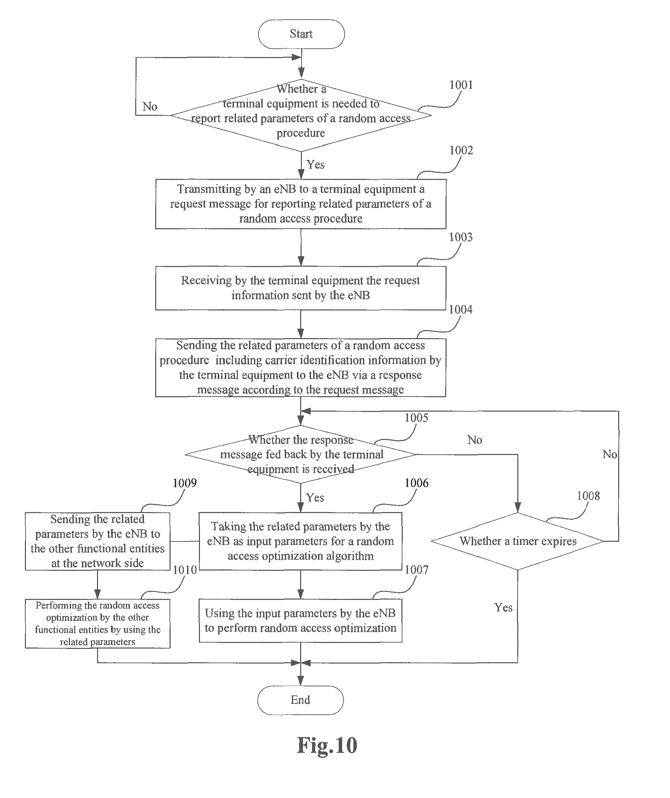

Figure 10 is a flowchart of the method for obtaining parameters of an eighth embodiment of the present invention. As shown in Fig. 10, the method comprises:
step 1001: judging, by an eNB, according to the requirement of a random access optimization algorithm, whether a terminal equipment is needed to report related parameters of a random access procedure ; and if the result of judgment is positive, executing step 1002; otherwise, proceeding with judgment;
step 1002: initiating a request if the result of judgment in step 1001 is that the terminal equipment is needed to report related parameters of a random access procedure ;
wherein, the eNB may send the request via a random access information request message, such as a UE Information Request message, and indicates, in the random access information request message, the related parameters of a random access procedure needing to be reported by the terminal equipment;
step 1003: receiving the request information by the terminal equipment;
step 1004: sending the related parameters of a random access procedure by the terminal equipment to the eNB via a response message according to the request message;
wherein the response message may be a random access information response message, such as a UE Information Response message; at this moment, as the eNB does not definitely instruct in which of the carriers the related parameters of a random access procedure to be reported, the carrier identification information of all or part of the carriers may be included in the response message;
hence, the related parameters of the response message further comprise, in addition to the carrier identification information of all or part of the carriers, the number of the random access preambles transmitted in the random access procedure that is last successfully completed, and information on whether contention is detected for at least one of random access preambles during the random access procedure that is last successfully completed;
step 1005: judging by the eNB whether the response message fed back by the terminal equipment according to the request message is received; and if the result of judgment is positive, executing step 1006; otherwise, executing step 1008;
step 1006: taking the related parameters in the response message by the eNB as input parameters for a random access optimization algorithm, if the eNB receives the response message fed back by the terminal equipment in step 1005;
step 1007: using the input parameters by the eNB to perform random access optimization with a predetermined random access optimization algorithm;
wherein the eNB is taken as an entity at the network side for executing the optimization algorithm, and the optimization algorithm may be any one of existing optimization algorithms, which shall not be describe any further;
step 1008: judging by the eNB whether a timer expires if the result of judgment in step 1005 is that the eNB does not receives the response message; turning back to step 1005 if the timer does not expire; and determining by the eNB that the response message is not received if the timer expires, the process being terminated;
furthermore, in addition that the eNB is taken as an entity at the network side for executing the optimization algorithm, other functional entities may also be taken as entities for executing the optimization algorithm; hence, after step 1006, step 1009 may further be included;
step 1009: sending the related parameters by the eNB to the other functional entities via the network; and
step 1010: performing the random access optimization by the other functional entities by using the related parameters.

It can be seen from the above embodiment that in a multi-band carrier system, the eNB may instruct the terminal equipment to report related parameters of a random access procedure including carrier identification information, such that the network side can perform optimization to random access channels in the corresponding carrier, thereby reducing time delay and improving rate of success of random access, and solving the problems existing in a multi-band carrier system in the prior art.

It should be understood by those skilled in the art that all or part of the steps in the methods of the above embodiments may be implemented by related hardware instructed by a program, and the program may be stored in a computer-readable storage medium. In executing the program, all or part of the steps in the methods of the above embodiments may be included, and the storage medium may comprise an ROM, an RAM, a floppy disk, and a compact disk, etc.

An embodiment of the present invention provides also an eNB and a terminal equipment as described below. As the principles of the eNB and the terminal equipment for solving problems are similar to those of the method for obtaining parameters based on an eNB and a terminal equipment as described above, the implementation of the method may be referred to for the implementation of the eNB and the terminal equipment, and the repeated parts shall not be described further.

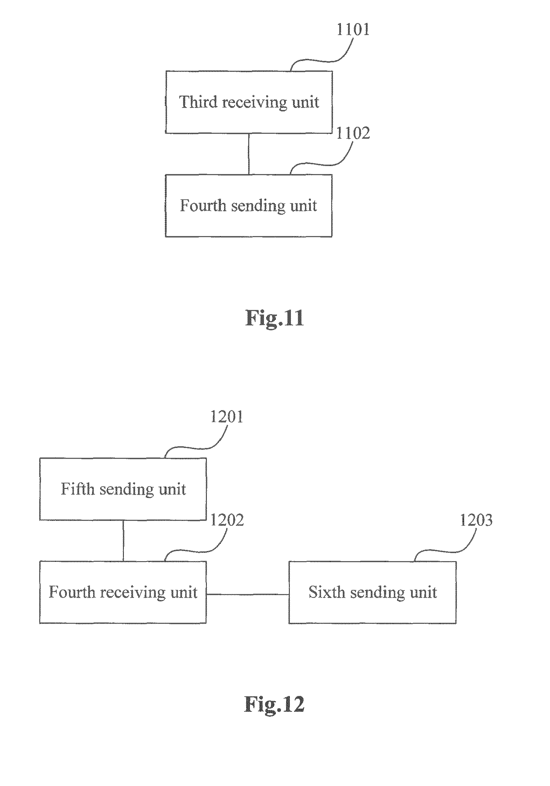

Figure 11 is a schematic structural diagram of a terminal equipment of a ninth embodiment of the present invention. As shown in Fig. 11, the terminal equipment comprises: a third receiving unit 1101 and a fourth sending unit 1102; wherein,
the third receiving unit 1101 is configured to receive a request message sent by an eNB reporting related parameters of a random access procedure ; and
the fourth sending unit 1102 is configured to send the related parameters of a random access procedure occurred in a carrier to the eNB according to the request message received by the third receiving unit 1101, such that corresponding random access optimization is performed by a network side by using the related parameters;
wherein the related parameters comprise carrier identification information, the number of the random access preambles transmitted during the random access procedure that is last successfully completed in the carrier corresponding to the carrier identification information, and information on whether contention is detected for at least one of random access preambles during the random access procedure that is last successfully completed. And wherein, the carrier identification information may be identification information of all or part of the carriers.

Wherein, the carrier identification information may be identification information of all or part of the carriers, and the fourth sending unit 1102 sends related parameters in part of or all of the carriers as described in the above embodiments, which shall not be described here any further.

It can be seen from the above embodiment that in a multi-band carrier system, the terminal equipment may report related parameters of a random access procedure including carrier identification information, according to an instruction of the eNB, such that the network side can perform optimization to random access channels in a corresponding carrier, thereby reducing time delay and improving rate of success of random access, and solving the problems existing in a multi-band carrier system in the prior art.

Fig. 12 is a schematic structural diagram of an eNB of a tenth embodiment of the present invention. As shown in Fig. 12, the eNB comprises: a fifth sending unit 1201 and a fourth receiving unit 1202; wherein,
the fifth sending unit 1201 is configured to send a request message for obtaining related parameters of occurred random access procedure ; and
the fourth receiving unit 1202 is configured to receive the related parameters of a random access procedure occurred in a carrier fed back by the terminal equipment according to the request message, such that the eNB performs corresponding random access optimization by using the related parameters;
wherein the related parameters comprise carrier identification information, the number of the random access preambles transmitted during the random access procedure that is last successfully completed in the carrier corresponding to the carrier identification information, and information on whether contention is detected for at least one of random access preambles during the random access procedure that is last successfully completed. Wherein, the carrier identification information may be identification information of all or part of the carriers.

Wherein, the carrier identification information is as described in the above embodiment, which shall not be described here any further.

In this embodiment, the eNB may be taken as an entity for performing optimization to the random access; however, other functional entities at a network side may also perform optimization to the random access. Thus, the eNB further comprises:
a sixth sending unit 1203 configured to send the related parameters received by the fourth receiving unit 1202 to the other functional entities at the network side, such that the other functional entities at the network side perform corresponding random access optimization by using the related parameters.

It can be seen from the above embodiment that in a multi-band carrier system, the eNB may instruct the terminal equipment to report related parameters of a random access procedure including carrier identification information, such that the network side can perform optimization to random access channels in the corresponding carrier, thereby reducing time delay and improving rate of success of random access, and solving the problems existing in a multi-band carrier system in the prior art.

An embodiment of the present invention further provides a computer-readable program, wherein when the program is executed in a terminal equipment, the program enables the computer to carry out the method for obtaining parameters as described in the first or sixth embodiment in the terminal equipment.

An embodiment of the present invention further provides a storage medium in which a computer-readable program is stored, wherein the computer-readable program enables the computer to carry out the method for obtaining parameters as described in the first or sixth embodiment in a terminal equipment.

An embodiment of the present invention further provides a storage medium in which a computer-readable program, wherein when the program is executed in an eNB, the program enables the computer to carry out the method for obtaining parameters as described in the second or seventh embodiment in the eNB.

An embodiment of the present invention further provides a storage medium in which a computer-readable program is stored, wherein the computer-readable program enables the computer to carry out the method for obtaining parameters as described in the second or seventh embodiment in an eNB.

The above devices and methods of the present invention may be implemented by hardware, and may also be implemented by hardware in combination with software. The present invention relates to such a computer-readable program that when the program is executed by a logic component, it enables the logic component to implement the devices or constitutional parts as described above, or enables the logic component to implement the methods or steps as described above. The present invention relates also to a storage medium for storing the above program, such as a hard disk, a floppy disk, a CD, and flash memory, etc.

The present invention are described above in conjunction with the embodiments, however, it will be apparent to those skilled in the art that such description is exemplary only and is not limitative to the protection scope of the present invention. Various variations and modifications may be made by those skilled in the art without departing from the spirits and principle of the present invention, which will fall within the protection scope of the present invention.

## Claims

1. A method for obtaining parameters, comprising:
receiving by a terminal equipment a request message sent by an eNB reporting related parameters of a random access procedure occurred in at least one carrier, the request message including carrier identification information; and
sending the related parameters of a random access procedure occurred in the at least one carrier by the terminal equipment to the base station according to the request message, such that corresponding random access optimization is performed by a network side by using the related parameters;
wherein the related parameters comprise the number of the random access preambles transmitted in the random access procedure that is last successfully completed in the at least one carrier, and information on whether contention is detected for at least one of random access preambles during the random access procedure that is last successfully completed.

2. The method according claim 1, wherein the carrier identification information is preconfigured carrier identification information for uniquely identifying different carriers; and
the terminal equipment sends the related parameters of a random access procedure occurred in a corresponding carrier to the base station according to the carrier identification information in the request message.

3. The method according claim 1, wherein when a carrier in each wave band is capable of being used for a random access, the carrier identification information is preconfigured carrier identification information; and
the terminal equipment sends the related parameters of a random access procedure occurred on a corresponding carrier to the base station according to the wave band identification information in the request message.

4. The method according claim 1, wherein when more than one carriers in each wave band are capable of being used for random access, the carrier identification information comprises wave band identification information and carrier identification information; wherein the carrier identification information is unique in the same wave band and is not unique between different wave bands; and
the terminal equipment sends the related parameters of a random access procedure occurred in a corresponding carrier to the base station according to the wave band identification information and carrier identification information in the request message.

5. A method for obtaining parameters, comprising:
transmitting by a base station to a terminal equipment a request message for obtaining related parameters of a random access procedure occurred in at least one carrier, the request message including carrier identification information; and
receiving the related parameters of a random access procedure occurred in at least one carrier fed back by the terminal equipment according to the request message, such that the base station performs corresponding random access optimization by using the related parameters; wherein the related parameters comprise the number of the random access preambles transmitted in the random access procedure that is last successfully completed in the at least one carrier, and information on whether contention is detected for at least one of random access preambles during the random access procedure that is last successfully completed.

6. The method according claim 5, wherein the carrier identification information is preconfigured carrier identification information for uniquely identifying different carriers; or
when a carrier in each wave band is capable of being used for a random access, the carrier identification information is preconfigured wave band identification information; or
when more than one carriers in each wave band are capable of being used for a random access, the carrier identification information comprises wave band identification information and carrier identification information; wherein the carrier identification information is unique in the same wave band and is not unique between different wave bands.

7. The method according claim 5, wherein the method further comprises:
sending the related parameters by the base station to other functional entities at the network side, such that the other functional entities at the network side perform corresponding random access optimization according to the related parameters.

8. A terminal equipment, comprising:
a first receiving unit to receive a request message sent by a base station reporting related parameters of a random access procedure occurred in at least one carrier, the request message including carrier identification information; and
a first sending unit to send the related parameters of a random access procedure occurred in the at least one carrier to the base station according to the request message received by the first receiving unit, such that corresponding random access optimization is performed by a network side by using the related parameters;
wherein the related parameters comprise the number of the random access preambles transmitted in the random access procedure that is last successfully completed in the at least one carrier, and information on whether contention is detected for at least one of random access preambles during the random access procedure that is last successfully completed.

9. The terminal equipment according to claim 8, wherein the carrier identification information is preconfigured carrier identification information for uniquely identifying different carriers; and
the first sending unit is particularly used to send the related parameters of a random access procedure occurred in a corresponding carrier to the base station according to the carrier identification information; or
when a carrier in each wave band is capable of being used for a random access, the carrier identification information is preconfigured wave band identification information; and
the first sending unit is particularly used to send the related parameters of a random access procedure occurred in a corresponding carrier to the base station according to the wave band identification information; or
when more than one carriers in each wave band are capable of being used for a random access, the request message comprises wave band identification information and carrier identification information; wherein the carrier identification information is unique in the same wave band and is not unique between different wave bands; and
the first sending unit is particularly used to send the related parameters of a random access procedure occurred in a corresponding carrier to the base station according to the wave band identification information and the carrier identification information.

10. A base station, comprising:
a second sending unit to send a request message for obtaining related parameters of a random access procedure occurred in at least one carrier to a base station, the request message including carrier identification information; and
a second receiving unit to receive the related parameters of a random access procedure occurred in the at least one carrier fed back by the terminal equipment according to the request message, such that the base station performs corresponding random access optimization by using the related parameters;
wherein the related parameters comprise the number of the random access preambles transmitted in the random access procedure that is last successfully completed in the at least one carrier, and information on whether contention is detected for at least one of random access preambles during the random access procedure that is last successfully completed.

11. A method for obtaining parameters, comprising the steps of:
receiving by a terminal equipment a request message sent by a base station reporting related parameters of a random access procedure ; and
sending the related parameters of a random access procedure occurred in a carrier by the terminal equipment to the base station according to the request message, such that corresponding random access optimization is performed by a network side by using the related parameters;
wherein the related parameters comprise carrier identification information, the number of the random access preambles transmitted during the random access procedure that is last successfully completed in a carrier corresponding to the carrier identification information, and information on whether contention is detected for at least one of random access preambles during the random access procedure that is last successfully completed.

12. The method according claim 11, wherein the carrier identification information is identification information for all the carriers, or identification information for part of the carriers; and
the step of sending the related parameters of a random access procedure occurred in a carrier by the terminal equipment to the base station according to the request message particularly comprises:
sending the related parameters of a random access procedure occurred in all or part of the carriers by a terminal equipment to the base station according to the request message.

13. The method according claim 12, wherein the step of sending the related parameters of a random access procedure occurred in all or part of the carriers by the terminal equipment to the base station according to the request message particularly comprises:
sending the related parameters of a random access procedure occurred in all of the carriers by the terminal equipment to the base station if the related parameters in all the carriers to be reported currently by the terminal equipment are different from the related parameters in all the carriers reported last time; and
sending the related parameters of a random access procedure occurred in part of the carriers by the terminal equipment to the base station if the related parameters in the part of the carriers within the related parameters in all the carriers to be reported currently by the terminal equipment are different from the related parameters in the part of the carriers reported last time.

14. The method according to claim 11, wherein the carrier identification information is preconfigured carrier identification information for uniquely identifying different carriers; or
when a carrier in each wave band is capable of being used for random access, the carrier identification information is preconfigured wave band identification information; or
when more than one carriers in each wave band are capable of being used for random access, the carrier identification information comprises wave band identification information and carrier identification information; wherein the carrier identification information is unique in the same wave band and is not unique between different wave bands.

15. A method for obtaining parameters, comprising the steps of:
transmitting by a base station to a terminal equipment a request message for obtaining related parameters of occurred random access procedure ; and
receiving the related parameters of a random access procedure occurred in a carrier fed back by the terminal equipment according to the request message, such that the base station performs corresponding random access optimization by using the related parameters;
wherein the related parameters comprise carrier identification information, the number of the random access preambles transmitted during the random access procedure that is last successfully completed in the carrier corresponding to the carrier identification information, and information on whether contention is detected for at least one of random access preambles during the random access procedure that is last successfully completed.

16. The method according to claim 15, wherein the carrier identification information is preconfigured carrier identification information for uniquely identifying different carriers; or
when a carrier in each wave band is capable of being used for a random access, the carrier identification information is preconfigured wave band identification information; or
when more than one carriers in each wave band are capable of being used for a random access, the carrier identification information comprises wave band identification information and carrier identification information; wherein the carrier identification information is unique in the same wave band and is not unique between different wave bands.

17. The method according claim 15, wherein the method further comprises:
sending the related parameters by the base station to other functional entities at the network side, such that the other functional entities at the network side perform corresponding random access optimization according to the related parameters.

18. A terminal equipment, comprising:
a third receiving unit to receive a request message sent by a base station reporting related parameters of a random access procedure ; and
a fourth sending unit to send the related parameters of a random access procedure occurred in a carrier to the base station according to the request message received by the third receiving unit, such that corresponding random access optimization is performed by a network side by using the related parameters;
wherein the related parameters comprise carrier identification information, the number of the random access preambles transmitted during the random access procedure that is last successfully completed in the carrier corresponding to the carrier identification information, and information on whether contention is detected for at least one of random access preambles during the random access procedure that is last successfully completed.

19. A base station, comprising:
a fifth sending unit to send a request message for obtaining related parameters of occurred random access procedure ; and
a fourth receiving unit to receive the related parameters of a random access procedure occurred in a carrier fed back by the terminal equipment according to the request message, such that the base station performs corresponding random access optimization by using the related parameters;
wherein the related parameters comprise carrier identification information, the number of the random access preambles transmitted during the random access procedure that is last successfully completed in the carrier corresponding to the carrier identification information, and information on whether contention is detected for at least one of random access preambles during the random access procedure that is last successfully completed.

20. A computer-readable program, wherein when the program is executed in a terminal equipment, the program enables the computer to carry out the method for obtaining parameters as claimed in any of claims 1-4, or to carry out the method for obtaining parameters as claimed in any of claims 11-14, in the terminal equipment.

21. A storage medium in which a computer-readable program is stored, wherein the computer-readable program enables the computer to carry out the method for obtaining parameters as claimed in any of claims 1-4, or to carry out the method for obtaining parameters as claimed in any of claims 11-14, in a terminal equipment.

22. A computer-readable program, wherein when the program is executed in a base station, the program enables the computer to carry out the method for obtaining parameters as claimed in any of claims 5-7, or to carry out the method for obtaining parameters as claimed in any of claims 15-17, in the base station.

23. A storage medium in which a computer-readable program is stored, wherein the computer-readable program enables the computer to carry out the method for obtaining parameters as claimed in any of claims 5-7, or to carry out the method for obtaining parameters as claimed in any of claims 15-17, in a base station.
